# EUROPÄISCHE PATENTSCHRIFT

(11) **EP 2 634 992 B1**
(45) Veröffentlichungstag und Bekanntmachung des Hinweises auf die Patenterteilung: **14.05.2014**
(21) Anmeldenummer: 13000924.4
(22) Anmeldetag: 25.02.2013
(51) Int. Cl.: H04L 29/06

(54) **Verfahren zum beschleunigten Aufbau einer Verbindung zwischen einem integrierten Zugangsgerät und einem Telekommunikationsnetz, integriertes Zugangsgerät, Computerprogramm und Computerprogramm-Produkt**
Method for accelerated formation of a connection between a telecommunications network and an integrated access device, integrated access device, computer program and computer program product
Procédé de création accélérée d'une liaison entre un réseau de télécommunication et un dispositif d'accès intégré, dispositif d'accès intégré, programme informatique et produit de programme informatique

(30) Priorität: 29.02.2012 DE 102012003831
(43) Veröffentlichungstag der Anmeldung: 04.09.2013
(73) Patentinhaber: Deutsche Telekom AG, 53113 Bonn (DE)
(72) Erfinder: Zürlein, Ralf, 64380 Roßdorf (DE); Schneider, Oliver, 64625 Bensheim (DE)
(74) Vertreter: Schwöbel, Thilo K.

(56) Entgegenhaltungen:
- WO-A1-2012/066421
- US-A1- 2004 081 141
- US-A1- 2009 022 149

## Beschreibung

### Stand der Technik

Die Erfindung betrifft ein Verfahren zum beschleunigten Aufbau einer Verbindung zwischen einem integrierten Zugangsgerät und einem Telekommunikationsnetz über einen Zugangsknoten des Telekommunikationsnetzes.

Die Erfindung betrifft ferner ein integriertes Zugangsgerät zum beschleunigten Aufbau einer Verbindung zwischen dem integrierten Zugangsgerät und einem Telekommunikationsnetz über einen Zugangsknoten des Telekommunikationsnetzes.

Gegenwärtig ist es gängige Praxis, sprachbasierte Telefonanrufe unter Benutzung der sogenannten Voice-over-Internet Protokoll (VoIP) Technologie zu realisieren.

Hierzu ist es in Internet Protokoll basierten Telekommunikationsnetzen bekannt, dass Anschlussgeräte, die sich beispielsweise in der Wohnung eines Telefonieteilnehmers befinden, über eine analoge oder digitalen Schnittstelle mit einem Telekommunikationsendgerät verbunden werden, so dass über das Telekommunikationsendgerät Telefongespräche durchgeführt werden können.

Ferner ist es bei bisher bekannten IP-basierten Festnetzanschlüssen bekannt, dass ein integriertes Zugangsgerät (IAD, integrated access device) - nachfolgend auch als Home Gateway bezeichnet - verwendet wird, wobei ein solches integriertes Zugangsgerät eine Verbindung, insbesondere eine Telefonverbindung, mit dem Telekommunikationsnetz gemäß dem VoIP-Standard (beispielsweise gemäß dem SIP Protokoll) über das sogenannte Blockwahlverfahren durchführt. Dies bedeutet, dass bei der VoIP-basierten Telefonie das Home Gateway die Zielrufnummer (zum anzurufenden entfernten Telefonieteilnehmer) immer komplett (d.h. im Blockwahlverfahren) an das Telekommunikationsnetz übergibt, insbesondere wird die Signalisierung zum Rufaufbau über eine Einladungsnachricht (nachfolgend auch als Invite-Nachricht bezeichnet) bewerkstelligt, die die vollständige Rufnummer des Zielteilnehmers (bzw. die Zielidentifikation insbesondere in Form einer Ziel-URL (Uniform Ressource Locator), beispielsweise in Form eines SIP-URI (Uniform Resource Identifier)) umfasst.

Beim Eingeben der einzelnen Zeichen der Zielrufnummer bzw. der Teilnehmeridentifikationsnummer des Telefonieziels mittels eines über eine analoge oder digitale Schnittstelle an das integrierte Zugangsgerät angeschlossenen Telekommunikationsendgeräts kommt es hierbei regelmäßig zu einem verzögerten Rufaufbau, weil nach Eingabe des letzten Zeichens eine vorgegebene Zeitdauer (auch als Timer bezeichnet, typischerweise 3 bis 5 Sekunden) abgewartet werden muss, um zu prüfen, ob die gewünschte Teilnehmeridentifikationsnummer noch ein weiteres Zeichen aufweist. Lediglich so kann sichergestellt werden, dass die Teilnehmeridentifikationsnummer vollständig eingegeben wurde, da davon auszugehen ist, dass nach einer Pause von etwa 3 bis 5 Sekunden (bei der Eingabe einer Zielrufnummer am Telekommunikationsendgerät) keine weitere Ziffer mehr eingegeben wird. Die vorgegebene Zeitdauer, die nach der zuletzt eingegebenen Nummer bzw. dem zuletzt eingegebenen Zeichen ohne Eingabe eines Endzeichens (im Englischen auch bezeichnet als "end of dial signal") abgewartet werden muss , bevor ein Rufaufbau des integrierten Zugangsgeräts beginnt, entspricht dabei letztenendes einem Endzeichen für die Rufnummer. Unter der Voraussetzung, dass einem Benutzer ein dezidiertes Endzeichen nicht bekannt ist oder ein solches nicht benutzt wird, ist es damit zwingend erforderlich, vor dem Rufaufbau die vorgegebene Zeitdauer abzuwarten.

US2004/081141 und US 2009/022149 beschreiben Verfahren zum Verbindungsaufbau über PSTN oder VoIP Netzwerke. WO 2012/066421, veröffentlicht am 24.05.2012 und eingereicht am 25.10.2011, beschreibt ein Verfahren bei dem empfangene Zeichen zum Gateway des Empfängers übertragen werden.

### Offenbarung der Erfindung

Der Erfindung liegt die Aufgabe zugrunde, ein Verfahren zum beschleunigten Aufbau einer Verbindung zwischen einem integrierten Zugangsgerät und einem Telekommunikationsnetz bzw. ein solches integriertes Zugangsgerät bereitzustellen, welches die Nachteile des Standes der Technik nicht oder in reduziertem Maße aufweist und einen vereinfachten und insbesondere schnelleren bzw. beschleunigten Aufbau der Verbindung, insbesondere einer Telefonieverbindung ermöglicht, zumindest für eine Vielzahl von Fällen von gewählten Rufnummern, so dass sich zumindest im Durchschnitt von typischerweise anfallenden Rufaufbaufällen ein beschleunigter Rufaufbau ergibt..

Diese Aufgabe wird erfindungsgemäß gelöst durch ein Verfahren zum Aufbau einer Verbindung zwischen einem integrierten Zugangsgerät (IAD, Integrated Access Device) und einem Telekommunikationsnetz unter Benutzung eines an das integrierte Zugangsgerät angeschlossenen und das Überlappungswahlverfahren (overlap dialing) benutzenden Telekommunikationsendgeräts, wobei in einem Speicherbereich eine Mehrzahl von gespeicherten Teilnehmeridentifikationsnummern gespeichert sind, wobei das Verfahren die folgenden Schritte umfasst:
- in einem ersten Verfahrensschritt wird eine eine Mehrzahl von Zeichen umfassende eingegebene Teilnehmeridentifikationsnummer zum integrierten Zugangsgerät übertragen,
- in einem zweiten Verfahrensschritt wird ein Vergleich der eingegebenen Teilnehmeridentifikationsnummer mit den gespeicherten Teilnehmeridentifikationsnummern des Speicherbereichs durchgeführt,
- in einem dritten Verfahrensschritt wird während eines vorgegebenen ersten Zeitintervalls nach der Eingabe des zuletzt eingegebenen Zeichens der eingegebenen Teilnehmeridentifikationsnummer gewartet, bevor der Aufbau der Verbindung zwischen dem integrierten Zugangsgerät und dem Telekommunikationsnetz unter Verwendung der eingegebenen Teilnehmeridentifikationsnummer initiiert wird
- in einem vierten Verfahrensschritt wird der Aufbau der Verbindung zwischen dem integrierten Zugangsgerät und dem Telekommunikationsnetz durch Übertragung einer der Mehrzahl von gespeicherten Teilnehmeridentifikationsnummern initiiert,
wobei - für den Fall, dass der Vergleich der eingegebenen Teilnehmeridentifikationsnummer mit einer der gespeicherten Teilnehmeridentifikationsnummern ein positives Vergleichsergebnis liefert - entweder direkt oder nach Ablauf eines vorgegebenen zweiten Zeitintervalls der vierte Verfahrensschritt
oder - für den Fall, dass der Vergleich der eingegeben Teilnehmeridentifikationsnummer mit einer der gespeicherten Teilnehmeridentifikationsnummern ein negatives Vergleichsergebnis liefert - der dritte Verfahrensschritt unter Verwendung der eingegebenen Teilnehmeridentifikationsnummer als zu sendende Teilnehmeridentifikationsnummer durchgeführt wird,
wobei im Fall der Eingabe eines zusätzlichen Zeichens der eingegebenen Teilnehmeridentifikationsnummer während des vorgegebenen ersten Zeitintervalls der Vergleich des zweiten Schritts unter Verwendung der eingegebenen Teilnehmeridentifikationsnummer unter Einbeziehung des zusätzlichen Zeichens durchgeführt wird.

Es ist hierdurch gemäß der vorliegenden Erfindung in vorteilhafter Weise möglich, dass zumindest in solchen Fällen, in denen die (am Telekommunikationsendgerät) eingegebene Teilnehmeridentifikationsnummer einer der gespeicherten Teilnehmeridentifikationsnummern entspricht, d.h. identisch ist mit einer der gespeicherten Teilnehmeridentifikationsnummern, trotz der Verwendung des

Überlappungswahlverfahrens (overlap dialing) (zwischen dem Telekommunikationsendgerät und dem integrierten Zugangsgerät) ein verkürzter und damit schnellerer Rufaufbau möglich ist. Die bei herkömmlicher Verwendung des Überlappungswahlverfahrens zum Aufbau einer Verbindung angewandte zwingende Benutzung eines Timers (d.h. das Abwarten einer vorgegebenen Zeitdauer bzw. eines Zeitintervalls, .d.h des vorgegebenen ersten Zeitintervalls), der nach der Eingabe des letzten Zeichens, insbesondere der letzten Ziffer, der eingegebenen Teilnehmeridentifikationsnummer (d.h. ohne Benutzung einer Steuertaste wie etwa die #-Taste als Endzeichen, d.h. zum Abschluss der Teilnehmeridentifikationsnummer) gestartet wird, führt dazu, dass in jedem Fall, d.h. bei jedweder Teilnehmeridentifikationsnummer, die Verzögerung auftritt, d.h. der Rufaufbau (bzw. die Herstellung bzw. der Aufbau der Verbindung) zeitverzögert stattfindet. Hierbei ist die vorliegende Erfindung nicht auf den kompletten Rufaufbau bezogen, d.h. die vollständige Herstellung der Verbindung zwischen dem anrufenden Telekommunikationsendgerät und dem angerufenen Telekommunikationsendgerät, sondern bezieht im Wesentlichen auf die Initiierung der Verbindung durch das mit dem Telekommunikationsendgerät verbunden integrierten Zugangsgerät.

Bei der Verwendung von analogen Telekommunikationsendgeräten, d.h. Telekommunikationsendgeräten, die über eine analoge Schnittstelle an ein integriertes Zugangsgerät angebunden werden, besteht die Notwendigkeit, die Zeichen bzw. die Ziffern von zu wählenden Teilnehmeridentifikationsnummern mittels des Überlappungswahlverfahrens (overlap dialing), also sequentiell, d.h. (zeitlich) hintereinander zu übertragen, beispielsweise mittels des Frequenzwahlverfahrens oder mittels des Impulswahlverfahrens (zumindest sofern nicht der Abschluss der Teilnehmeridentifikationsnummer durch eine Steuertaste, wie etwa die #-Taste, benutzt wird). Bei der Verwendung von digitalen Telekommunikationsendgeräten, d.h. Telekommunikationsendgeräten, die über eine digitale Schnittstelle angebunden werden, besteht zwar nicht die Notwendigkeit (d.h. solche Geräte können auch eine Blockwahlfunktionalität verwenden), aber die Möglichkeit, die Zeichen bzw. die Ziffern von zu wählenden Teilnehmeridentifikationsnummern mittels des Überlappungswahlverfahrens (overlap dialing), also sequentiell, d.h. (zeitlich) hintereinander zu übertragen (d.h. zumindest bei bestimmten Benutzungssituationen bzw. bei einer bestimmten Einstellung des digitalen Telekommunikationsendgeräts wird das Überlappungswahlverfahren (overlap dialing) angewendet). Auf der Empfängerseite einer solchen Übertragung von zu wählenden Teilnehmeridentifikationsnummern, d.h. auf der Seite des integrierten Zugangsgeräts, besteht dann bei Verwendung des Überlappungswahlverfahrens (overlap dialing) die Schwierigkeit, nach jeder empfangenen Ziffer (bzw. nach jedem empfangenen Zeichen) zu entscheiden, ob die zu wählende Teilnehmeridentifikationsnummer noch ein weiteres Zeichen bzw. eine weitere Ziffer aufweist oder nicht. Aus diesem Grund wird bei Verwendung des Überlappungswahlverfahrens (overlap dialing) herkömmlicherweise nach jedem Empfang auf der Empfängerseite einer solchen Übertragung (d.h. im Rahmen der vorliegenden Erfindung am integrierten Zugangsgerät) während eines bestimmten Zeitintervalls abgewartet, ob noch ein Zeichen bzw. eine Ziffer empfangen wird oder nicht. Wenn das Zeitintervall abgelaufen ist und keine Ziffer oder kein Zeichen empfangen wurde, wird angenommen, dass die zu wählende Teilnehmeridentifikationsnummer lediglich aus den bereits empfangenen Ziffern bzw. Zeichen besteht. Dies führt (in Abwesenheit von weiteren Steuerzeichen wie zum Beispiel einem die Nummer abschließenden Hash-Zeichen "#") zur Notwendigkeit, für jeden Fall eines solchen Aufbaus einer Verbindung zum Telekommunikationsnetz, insbesondere einer Telefonieverbindung bzw. einer Sprachverbindung, das fragliche Zeitintervall abzuwarten, was zu einer unnötigen Verzögerung und zu einem Komfortverlust auf der Seite eines Benutzers des Telekommunikationsendgeräts im Zusammenspiel mit dem integrierten Zugangsgerät führt.

Erfindungsgemäß ist es daher vorgesehen, dass zunächst eine Mehrzahl von Zeichen bzw. Ziffern einer eingegebenen Teilnehmeridentifikationsnummer zum integrierten Zugangsgerät übertragen werden und einem Vergleich mit (in einem Speicherbereich insbesondere des integrierten Zugangsgeräts) gespeicherten Teilnehmeridentifikationsnummern unterworfen wird. Falls dieser Vergleich positiv ist, d.h. die eingegebene Teilnehmeridentifikationsnummer entspricht einer der gespeicherten Teilnehmeridentifikationsnummern, wird diese gespeicherte Teilnehmeridentifikationsnummer (welche identisch mit der eingegebenen Teilnehmeridentifikationsnummer ist) an das integrierte Zugangsgerät übertragen, ohne dass das erste Zeitintervall abgewartet wird. Falls dieser Vergleich negativ ist, d.h. die eingegebene Teilnehmeridentifikationsnummer entspricht nicht (bzw. noch nicht) einer der gespeicherten Teilnehmeridentifikationsnummern, wird während eines ersten Zeitintervalls nach der Eingabe des zuletzt eingegebenen Zeichens der eingegebenen Teilnehmeridentifikationsnummer gewartet, bevor der Aufbau der Verbindung zum Telekommunikationsnetz initiiert wird. Falls während dieses ersten Zeitintervalls ein weiteres Zeichen (bzw. eine weitere Ziffer) zur eingegebenen Teilnehmeridentifikationsnummer hinzugefügt wird, wird der Vergleich anhand der (solchermaßen um die zusätzliche Ziffer oder das zusätzliche Zeichen) ergänzte Teilnehmeridentifikationsnummer durchgeführt. Falls dieser weitere Vergleich positiv ist, d.h. die eingegebene Teilnehmeridentifikationsnummer (unter Einschluss des zusätzlichen Zeichens bzw. der zusätzlichen Ziffer) entspricht einer der gespeicherten Teilnehmeridentifikationsnummern, wird diese gespeicherte Teilnehmeridentifikationsnummer (welche nun identisch ist mit der eingegebenen Teilnehmeridentifikationsnummer) an das integrierte Zugangsgerät übertragen, ohne dass das erste Zeitintervall abgewartet wird. Falls auch dieser weitere Vergleich negativ ist wird wieder das erste Zeitintervall abgewartet, bevor die eingegebene Teilnehmeridentifikationsnummer als zu sendende Teilnehmeridentifikationsnummer zum Telekommunikationsnetz übertragen wird.

Bei der vorliegenden Erfindung ist es besonders bevorzugt, dass die Verbindung eine Sprachverbindung gemäß dem Voice-over-Internet Protokoll-(VoIP), insbesondere unter Verwendung des SIP-Standards, ist.

Erfindungsgemäß ist es ferner besonders bevorzugt, dass der Aufbau der Verbindung zwischen dem integrierten Zugangsgerät und dem Telekommunikationsnetz mittels einer Einladungsnachricht (Invite-Nachricht) initiiert wird, insbesondere einer SIP-Invite-Nachricht.

Hierdurch ist es erfindungsgemäß in besonders einfacher Weise möglich, etablierte Mechanismen zum Rufaufbau bzw. zum Aufbau der Verbindung zwischen dem integrierten Zugangsgerät und dem Telekommunikationsnetz zu verwenden.

Erfindungsgemäß ist es ferner bevorzugt, dass der Aufbau der Verbindung zwischen dem integrierten Zugangsgerät und dem Telekommunikationsnetz durch Übertragung einer die eingegebene Teilnehmeridentifikationsnummer aufweisenden Nachricht vom integrierten Zugangsgerät zum Zugangsknoten des Telekommunikationsnetzes initiiert wird.

Hierdurch ist es erfindungsgemäß in vorteilhafter Weise möglich, dass die Teilnehmeridentifikationsnummer innerhalb einer einzigen Nachricht zum Telekommunikationsnetz übertragen wird.

Erfindungsgemäß ist es gemäß einer weiteren Ausführungsform ferner auch bevorzugt, dass das integrierte Zugangsgerät den Speicherbereich aufweist.

Erfindungsgemäß ist es ferner bevorzugt, dass der Vergleich im zweiten Verfahrensschritt der eingegebenen Teilnehmeridentifikationsnummer mit den gespeicherten Teilnehmeridentifikationsnummern des Speicherbereichs unter Einbeziehung jeweils aller Zeichen der gespeicherten Teilnehmeridentifikationsnummern durchgeführt wird.

Hierdurch ist es in besonders vorteilhafter Weise möglich, dass nur im Fall einer Identität zwischen der eingegebenen Teilnehmeridentifikationsnummer mit einer der gespeicherten Teilnehmeridentifikationsnummern die Schnellwahl, d.h. ohne Abwarten des ersten Zeitintervalls, erfolgt.

Erfindungsgemäß ist es weiterhin ebenfalls bevorzugt vorgesehen, dass der Speicherbereich eine vorgegebene Anzahl von Speicherplätzen zur Abspeicherung von gespeicherten Teilnehmeridentifikationsnummern aufweist, wobei der Speicherbereich einen ersten Speicherplatz und einen letzten Speicherplatz aufweist.

Hierdurch ist es in besonders vorteilhafter Weise möglich, dass eine Priorisierung der abzuspeichernden Teilnehmeridentifikationsnummern erfolgen kann.

Ferner ist es erfindungsgemäß bevorzugt, dass während oder nach der Durchführung des dritten Verfahrensschritts die zu sendende Teilnehmeridentifikationsnummer als eine gespeicherte Teilnehmeridentifikationsnummer im Speicherbereich abgespeichert wird oder aber erst dann als eine gespeicherte Teilnehmeridentifikationsnummer im Speicherbereich abgespeichert wird, wenn die Telefonverbindung erfolgreich aufgebaut und/oder beendet wurde, d.h. es fand entweder ein erfolgreicher Verbindungsaufbau vom rufenden Teilnehmer zum angerufenen Teilnehmer statt oder der rufende Teilnehmer erhält nach der Wahl der Rufnummer ein Freizeichen (wobei jedoch die Verbindung nicht aufgebaut wird, beispielsweise weil der angerufene Teilnehmer nicht abnimmt) oder aber der anrufende Teilnehmer erhält nach Wahl der Rufnummer ein Besetztzeichen.

Erfindungsgemäß ist es ferner bevorzugt, dass bei der Abspeicherung im Speicherbereich der zu sendenden Teilnehmeridentifikationsnummer als eine gespeicherte Teilnehmeridentifikationsnummer
- alle gespeicherten Teilnehmeridentifikationsnummern einen um eins erhöhten Speicherplatz des Speicherbereichs erhalten,
- die zu sendende Teilnehmeridentifikationsnummer auf dem ersten Speicherplatz der vorgegebenen Anzahl von Speicherplätzen des Speicherbereichs abgespeichert wird, wobei - für den Fall, dass zeitlich vor der Abspeicherung der zu sendenden Teilnehmeridentifikationsnummer der letzte Speicherplatz mit einer der gespeicherten Teilnehmeridentifikationsnummern gefüllt war, diese gespeicherte Teilnehmeridentifikationsnummer nach der Abspeicherung der zu sendenden Teilnehmeridentifikationsnummer nicht mehr gespeichert ist.

Hierdurch ist es erfindungsgemäß in vorteilhafter Weise möglich, dass - bei begrenztem Speicherplatz im Speicherbereich - lediglich diejenigen Teilnehmeridentifikationsnummern gespeichert werden, die besonders häufiger benutzt werden, so dass der Anteil derjenigen Rufaufbauvorgänge, die unter Verwendung einer gespeicherten Teilnehmeridentifikationsnummer erfolgen bzw. die Anzahl von Verbindungen unter Verwendung einer gespeicherten Teilnehmeridentifikationsnummer bezogen auf die Gesamtanzahl von Verbindungen des integrierten Zugangsgeräts vergleichsweise groß ist und somit der zeitliche Vorteil des schnelleren bzw. beschleunigten Aufbaus der Verbindung bzw. Telefonieverbindung in einer höheren Anzahl von Fällen realisiert wird.

Die vorliegende Erfindung bezieht sich ferner auch auf ein integriertes Zugangsgerät (IAD, Integrated Access Device) zum Aufbau einer Verbindung zwischen dem integrierten Zugangsgerät und einem Telekommunikationsnetz unter Benutzung eines (insbesondere über eine analoge oder digitale Schnittstelle) an das integrierte Zugangsgerät angeschlossenen und das Überlappungswahlverfahren (overlap dialing) benutzenden Telekommunikationsendgeräts, wobei in einem Speicherbereich des integrierten Zugangsgeräts eine Mehrzahl von gespeicherten Teilnehmeridentifikationsnummern gespeichert sind, wobei die Übertragung einer eine Mehrzahl von Zeichen umfassende eingegebene Teilnehmeridentifikationsnummer vom Telekommunikationsendgerät zum integrierten Zugangsgerät vorgesehen ist, wobei ein Vergleich der eingegebenen Teilnehmeridentifikationsnummer mit den gespeicherten Teilnehmeridentifikationsnummern des Speicherbereichs vorgesehen ist, wobei das integrierte Zugangsgerät konfiguriert ist, während eines vorgegebenen ersten Zeitintervalls nach der Eingabe des zuletzt eingegebenen Zeichens der eingegebenen Teilnehmeridentifikationsnummer zu warten, bevor der Aufbau der Verbindung zwischen dem integrierten Zugangsgerät und dem Telekommunikationsnetz unter Verwendung der eingegebenen Teilnehmeridentifikationsnummer initiiert wird, wobei das integrierte Zugangsgerät konfiguriert ist, den Aufbau der Verbindung zwischen dem integrierten Zugangsgerät und dem Telekommunikationsnetz durch Übertragung einer der Mehrzahl von gespeicherten Teilnehmeridentifikationsnummern zu initiieren,
wobei das integrierte Zugangsgerät - für den Fall, dass der Vergleich der eingegebenen Teilnehmeridentifikationsnummer mit einer der gespeicherten Teilnehmeridentifikationsnummern ein positives Vergleichsergebnis liefert - konfiguriert ist, entweder direkt anschließend oder nach Ablauf eines vorgegebenen zweiten Zeitintervalls den Aufbau der Verbindung zwischen dem integrierten Zugangsgerät und dem Telekommunikationsnetz durch Übertragung der einen der Mehrzahl von gespeicherten Teilnehmeridentifikationsnummern zu initiieren oder wobei das integrierte Zugangsgerät - für den Fall, dass der Vergleich der eingegeben Teilnehmeridentifikationsnummer mit einer der gespeicherten Teilnehmeridentifikationsnummern ein negatives Vergleichsergebnis liefert - konfiguriert ist während eines vorgegebenen ersten Zeitintervalls nach der Eingabe des zuletzt eingegebenen Zeichens der eingegebenen Teilnehmeridentifikationsnummer zu warten, bevor der Aufbau der Verbindung zwischen dem integrierten Zugangsgerät und dem Telekommunikationsnetz unter Verwendung der eingegebenen Teilnehmeridentifikationsnummer als zu sendende Teilnehmeridentifikationsnummer initiiert wird,
wobei im Fall der Eingabe eines zusätzlichen Zeichens der eingegebenen Teilnehmeridentifikationsnummer während des vorgegebenen ersten Zeitintervalls der Vergleich unter Verwendung der eingegebenen Teilnehmeridentifikationsnummer unter Einbeziehung des zusätzlichen Zeichens durchgeführt wird.

Hierdurch ist es erfindungsgemäß in besonders vorteilhafter Weise möglich, das integrierte Zugangsgerät derart zu betreiben, dass ein Höchstmaß an Komfort und Schnelligkeit beim Aufbau einer Verbindung, insbesondere einer Sprachverbindung realisierbar ist.

Erfindungsgemäß ist es insbesondere bevorzugt, dass das integrierte Zugangsgerät derart konfiguriert ist, dass der Vergleich im zweiten Verfahrensschritt der eingegebenen Teilnehmeridentifikationsnummer mit den gespeicherten Teilnehmeridentifikationsnummern des Speicherbereichs unter Einbeziehung jeweils aller Zeichen der gespeicherten Teilnehmeridentifikationsnummern durchgeführt wird.

Ferner bezieht sich die vorliegende Erfindung auch auf ein Computerprogramm mit Programm-Code-Mitteln, mit deren Hilfe alle Schritte des erfindungsgemäßen Verfahrens durchführbar sind, wenn das Computerprogramm auf einer programmierbaren Einrichtung oder einem integrierten Anschlussgerät ausgeführt wird.

Weiterhin ist Gegenstand der vorliegenden Erfindung ein Computerprogrammprodukt mit einem computerlesbaren Medium und einen auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einem integrierten Anschlussgerät ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt schematisch ein Beispiel eines Telekommunikationsnetzes mit einem verbundenen integrierten Zugangsgerät, an das eine Telekommunikationsendgerät über eine analoge oder digitale Schnittstelle angeschlossen ist.
- **Figur 2**: zeigt schematisch ein Beispiel eines Speicherbereichs und eine Andeutung des Vergleichs verschiedener eingegebener Teilnehmeridentifikationsnummern mit gespeicherten Teilnehmeridentifikationsnummern.
- **Figur 3**: zeigt schematisch ein Ablaufdiagramm zur Realisierung des erfindungsgemäßen Verfahrens.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

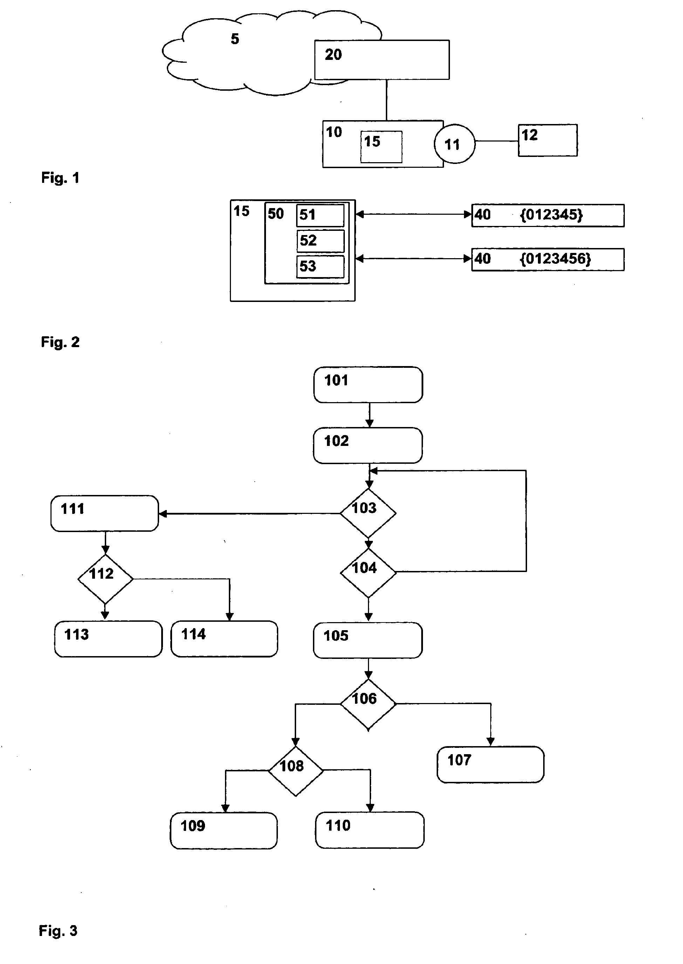

In Figur 1 ist ein Beispiel eines Telekommunikationsnetzes 5 mit einer Mehrzahl daran angeschlossener Benutzer bzw. Kunden schematisch wiedergegeben. Der Benutzer bzw. Kunde ist mit dem Telekommunikationsnetz 5 über ein integriertes Zugangsgerät 10 verbunden. Das integrierte Zugangsgerät 10 weist die Möglichkeit auf, eine Internet-Protokoll-Verbindung bzw. Internet-Protokoll-Konnektivität herzustellen. Es hat daher die Funktionalität eines Routers bzw. eines Home Gateways (d.h. eines Anschlussgeräts zum Netzabschluss eines privaten Netzes).

Das integrierte Zugangsgerät 10 ist mit dem Telekommunikationsnetz 5 insbesondere über einen Zugangsknoten 20 verbunden. Der Zugangsknoten 20 ist bevorzugt ein DSLAM (digital subscriber line access mulitplexer) oder MSAN (Multiservice Access Node), welcher entweder im Gebäude des Benutzers (beispielsweise einer Wohnung oder eines Hauses) installiert ist, insbesondere bei größeren Gebäuden mit einer Vielzahl von Benutzern, oder welcher in einer bestimmten Entfernung vom Gebäude des Benutzers, beispielsweise in einer Entfernung von weniger als ein paar Kilometern, bevorzugt in einer Entfernung von weniger als 1.000 Metern, besonders bevorzugt in einer Entfernung von weniger als 500 Metern, vom Gebäude des Benutzers angeordnet ist. Alternativ dazu kann der Zugangsknoten 20 auch als OLT (optical line terminal) ausgebildet sein.

Das integrierte Zugangsgerät 10 ist mit einem Telekommunikationsendgerät 12 über eine analoge oder digitale Schnittstelle 11 verbunden. Bei der Verwendung von analogen Telekommunikationsendgeräten 12, d.h. Telekommunikationsendgeräten, die über eine analoge Schnittstelle 11 angebunden werden, werden die Zeichen bzw. die Ziffern von zu wählenden bzw. einzugebenden Teilnehmeridentifikationsnummern 40 mittels des Überlappungswahlverfahrens (overlap dialing), also sequentiell, d.h. (zeitlich) hintereinander, beispielsweise mittels des Frequenzwahlverfahrens oder mittels des Impulswahlverfahrens, zum integrierten Zugangsgerät 10 übertragen. Bei der Verwendung von digitalen Telekommunikationsendgeräten 12, d.h. Telekommunikationsendgeräten, die über eine digitale Schnittstelle 11 angebunden werden, besteht zwar nicht die Notwendigkeit aber die Möglichkeit, die Zeichen bzw. die Ziffern von zu wählenden Teilnehmeridentifikationsnummern 40 mittels des Überlappungswahlverfahrens (overlap dialing), also sequentiell, d.h. (zeitlich) hintereinander zu übertragen.

In dem integrierten Zugangsgerät 10 ist ein Speicherbereich 15 vorhanden, der zur Speicherung von gespeicherten Teilnehmeridentifikationsnummern 50 dient.

Der Speicherbereich 15 ist in Figur 2 in vergrößerter schematischer Darstellung beispielhaft abgebildet. Ferner ist in Figur 2 ein Vergleich verschiedener eingegebener Teilnehmeridentifikationsnummern 40 mit gespeicherten Teilnehmeridentifikationsnummern 50 angedeutet.

Wegen der sequentiellen Übertragung der am Telekommunikationsendgerät 12 eingegebenen Teilnehmeridentifikationsnummern 40 besteht auf der Seite des integrierten Zugangsgeräts 10 die Schwierigkeit, nach jeder empfangenen Ziffer (bzw. nach jedem empfangenen Zeichen) zu entscheiden ob die zu wählende Teilnehmeridentifikationsnummer noch ein weiteres Zeichen bzw. eine weitere Ziffer aufweist oder nicht.

Erfindungsgemäß ist es nun vorgesehen, bei einer am integrierten Zugangsgerät 10 empfangenen eingegebenen Teilnehmeridentifikationsnummer 40 zu prüfen, ob diese mit einer der gespeicherten Teilnehmeridentifikationsnummern 50 übereinstimmt. Ist dies der Fall, dann besteht erfindungsgemäß keine Notwendigkeit, das erste Zeitintervall abzuwarten, ob noch ein Zeichen bzw. eine Ziffer empfangen wird oder nicht. Dies führt erfindungsgemäß für solche eingegebene Teilnehmeridentifikationsnummern 40, die einer der gespeicherten Teilnehmeridentifikationsnummern 50 entsprechen, zu einer Erhöhung des Benutzerkomforts und zu einer Beschleunigung beim Aufbau der Verbindung, insbesondere der Telefonie- bzw. Sprachverbindung zum Telekommunikationsnetz 5.

Erfindungsgemäß ist es vorgesehen, dass zunächst eine Mehrzahl von Zeichen bzw. Ziffern einer eingegebenen Teilnehmeridentifikationsnummer 40 zum integrierten Zugangsgerät 10 übertragen werden und in einem ersten Verfahrensschritt einem Vergleich mit in dem Speicherbereich 15 des integrierten Zugangsgeräts 10 gespeicherten Teilnehmeridentifikationsnummern 50 unterworfen wird. In Figur 2 sind beispielhaft eine erste gespeicherte Teilnehmeridentifikationsnummer 51, eine zweite gespeicherte Teilnehmeridentifikationsnummer 52 und eine dritte gespeicherte Teilnehmeridentifikationsnummer 53 abgebildet. Auf der rechten Seite der Figur 2 ist ein erstes Beispiel (oben) und ein zweites Beispiel (unten) einer eingegebenen Teilnehmeridentifikationsnummer 40 dargestellt. Das erste Beispiel umfasst eine Mehrzahl von Zeichen, vorliegend Ziffern, nämlich die Zeichenfolge "012345", was beispielsweise einer Zielteilnehmernummer entsprechen könnte. Das zweite Beispiel umfasst ebenfalls eine Mehrzahl von Zeichen, vorliegend Ziffern, nämlich die Zeichenfolge "0123456", d.h. die Zeichenfolge des ersten Beispiels der eingegebenen Teilnehmeridentifikationsnummer 40 mit einem zusätzlichen (angehängten) Zeichen "6", was ebenfalls einer Zielteilnehmernummer entsprechen könnte.

Falls der Vergleich einer eingegebenen Teilnehmeridentifikationsnummer 40 (beispielsweise des ersten Beispiels) positiv ist, d.h. die eingegebene Teilnehmeridentifikationsnummer 40 entspricht einer der gespeicherten Teilnehmeridentifikationsnummern 50, wird diese gespeicherte Teilnehmeridentifikationsnummer 50 (welche identisch mit der eingegebenen Teilnehmeridentifikationsnummer 40 ist) an das integrierte Zugangsgerät 10 übertragen, ohne dass das erste Zeitintervall abgewartet wird. Falls der Vergleich negativ ist, d.h. die eingegebene Teilnehmeridentifikationsnummer 40 entspricht nicht (bzw. noch nicht) einer der gespeicherten Teilnehmeridentifikationsnummern 50 (dies könnte etwa im vorliegenden Beispiel beim ersten Beispiel der eingegebenen Teilnehmeridentifikationsnummer 40 der Fall sein, jedoch nicht beim zweiten Beispiel der eingegebenen Teilnehmeridentifikationsnummer 40), wird während des ersten Zeitintervalls nach der Eingabe des zuletzt eingegebenen Zeichens der eingegebenen Teilnehmeridentifikationsnummer 40 das erste Zeitintervall abgewartet, bevor der Aufbau der Verbindung zum Telekommunikationsnetz initiiert wird. Falls während dieses ersten Zeitintervalls ein weiteres Zeichen (bzw. eine weitere Ziffer, vorliegend das zusätzliche Zeichen "6") zur eingegebenen Teilnehmeridentifikationsnummer 40 hinzugefügt wird, wird der Vergleich anhand der (solchermaßen um die zusätzliche Ziffer oder das zusätzliche Zeichen) ergänzte Teilnehmeridentifikationsnummer 40 durchgeführt. Falls dieser weitere Vergleich positiv ist, d.h. die eingegebene Teilnehmeridentifikationsnummer 40 (unter Einschluss des zusätzlichen Zeichens bzw. der zusätzlichen Ziffer) entspricht einer der gespeicherten Teilnehmeridentifikationsnummern 50, wird diese gespeicherte Teilnehmeridentifikationsnummer 50 (welche nun identisch ist mit der eingegebenen Teilnehmeridentifikationsnummer 40) an das integrierte Zugangsgerät 10 übertragen, ohne dass das erste Zeitintervall abgewartet wird. Falls auch dieser weitere Vergleich negativ ist, wird wieder das erste Zeitintervall abgewartet, bevor die eingegebene Teilnehmeridentifikationsnummer als zu sendende Teilnehmeridentifikationsnummer zum Telekommunikationsnetz 5 übertragen wird.

Erfindungsgemäß ist es vorgesehen, dass der Speicherbereich 15 eine vorgegebene Anzahl von Speicherplätzen zur Abspeicherung von gespeicherten Teilnehmeridentifikationsnummern 50 aufweist, beispielsweise 20 oder 50 oder 80 oder 100 oder 150 oder 200 Speicherplätze. Bevorzugt ist es erfindungsgemäß vorgesehen, dass der der Speicherbereich 15 einen ersten Speicherplatz und einen letzten Speicherplatz aufweist, d.h. dass die Speicherplätze geordnet vorgesehen sind, etwa im Sinne eines Stapel-Speichers (stack). Bei der Abspeicherung einer der gespeicherten Teilnehmeridentifikationsnummer 50 kann es vorgesehen sein, die maximale Anzahl an Zeichen bzw. Ziffern der gespeicherten Teilnehmeridentifikationsnummern 50 zu begrenzen, beispielsweise auf 20 Stellen oder auf 24 Stellen oder auf 25 Stellen oder auf 30 Stellen oder auf 40 Stellen.

Für den Fall, dass eine eingegebene Teilnehmeridentifikationsnummer 40 nicht mit einer der gespeicherten Teilnehmeridentifikationsnummern 50 übereinstimmt und (nach Ablauf des ersten Zeitintervalls als gesendete Teilnehmeridentifikationsnummer zum Telekommunikationsnetz 5 übertragen wird, ist es erfindungsgemäß bevorzugt vorgesehen, dass während oder nach der Durchführung des dritten Verfahrensschritts (d.h. der Übertragung der zu sendenden Teilnehmeridentifikationsnummer zum Telekommunikationsnetz 5 nach Ablauf des ersten Zeitintervalls) die zu sendende Teilnehmeridentifikationsnummer als eine gespeicherte Teilnehmeridentifikationsnummer 50 im Speicherbereich 15 abgespeichert wird, insbesondere wenn:
- die Verbindung erfolgreich hergestellt wird und/oder
- wenn die Verbindung zwar (im Sinne eines Rufzeichens beim Zielteilnehmer) hergestellt wird, der Zielteilnehmer jedoch nicht abnimmt, und/oder
- wenn die Verbindung aufgrund einer besetzten Leitung nicht hergestellt wird. Bevorzugt ist es erfindungsgemäß vorgesehen, dass die Abspeicherung dann unterbunden wird, wenn nach Übertragung der gesendeten Teilnehmeridentifikationsnummer der Fehlerzustand "kein Anschluss unter dieser Nummer" oder aber der Fehlerzustand "Rufnummer ist nicht bekannt" oder aber der Fehlerzustand "Rufnummer ist nicht vollständig" erkannt wird. Ferner ist es erfindungsgemäß bevorzugt vorgesehen, dass eine der im Speicherbereich 15 gespeicherten Teilnehmeridentifikationsnummer 50 dann gelöscht wird, wenn nachträglich zu dieser gespeicherten Teilnehmeridentifikationsnummer der Fehlerzustand "kein Anschluss unter dieser Nummer" oder aber der Fehlerzustand "Rufnummer ist nicht bekannt" oder aber der Fehlerzustand "Rufnummer ist nicht vollständig" erkannt wird.

Insbesondere ist es erfindungsgemäß bevorzugt vorgesehen, dass bei der Abspeicherung im Speicherbereich 15 der zu sendenden Teilnehmeridentifikationsnummer als eine gespeicherte Teilnehmeridentifikationsnummer 50
- alle gespeicherten Teilnehmeridentifikationsnummern 50 einen um eins erhöhten Speicherplatz des Speicherbereichs 15 erhalten,
- die zu sendende Teilnehmeridentifikationsnummer auf dem ersten Speicherplatz der vorgegebenen Anzahl von Speicherplätzen des Speicherbereichs 15 abgespeichert wird, wobei - für den Fall, dass zeitlich vor der Abspeicherung der zu sendenden Teilnehmeridentifikationsnummer der letzte Speicherplatz mit einer der gespeicherten Teilnehmeridentifikationsnummern 50 gefüllt war, diese gespeicherte Teilnehmeridentifikationsnummer nach der Abspeicherung der zu sendenden Teilnehmeridentifikationsnummer nicht mehr gespeichert ist, d.h. aus dem Speicherbereich geschoben wird.

Erfindungsgemäß ist es ferner vorgesehen, dass Sonderfälle wie zweistellige Rufnummern oder Nummern bzw. eingegebene Teilnehmeridentifikationsnummern, die Steuercodes (wie beispielsweise "*" oder "#") aufweisen, nicht als gespeicherte Teilnehmeridentifikationsnummer 50 im Speicherbereich 15 abgespeichert werden.

Bei einer Zurücksetzung (reset) des integrierten Zugangsgeräts 10 (insbesondere bei einer Zurücksetzung auf die Werkseinstellungen) kann es erfindungsgemäß vorgesehen sein, dass die im Speicherbereich 15 gespeicherten Teilnehmeridentifikationsnummern 50 gelöscht werden.

In Figur 3 ist ein Ausführungsbeispiel für ein Ablaufdiagramm zur Realisierung des erfindungsgemäßen Verfahrens abgebildet.

In einem ersten Ablaufpunkt 101 des Verfahrens wird das Verfahren gestartet und zu einem zweiten Ablaufpunkt 102 verzweigt. Anschließend wird im zweiten Ablaufpunkt 102 eine erste Ziffer bzw. ein erstes Zeichen am Telekommunikationsendgerät 12 eingegeben, zum integrierten Zugangsgerät 10 übertragen und zu einem dritten Ablaufpunkt 103 verzweigt. Der zweite Ablaufpunkt 102 entspricht im Wesentlichen dem ersten Verfahrensschritt gemäß der vorliegenden Erfindung. Am dritten Ablaufpunkt 103 wird der Vergleich gemäß dem zweiten Verfahrensschritt der vorliegenden Erfindung vorgenommen, d.h. es wird eine Prüfung der eingegebenen Zeichenfolge (d.h. der eingegebenen (bzw. bis dahin eingegebenen) Teilnehmeridentifikationsnummer 40) auf Identität mit einer der im Speicherbereich 15 gespeicherten Teilnehmeridentifikationsnummern 50 vorgenommen. Falls diese Prüfung positiv verläuft (d.h. es existiert im Speicherbereich 15 eine gespeicherte Teilnehmeridentifikationsnummer, die mit der (bis dahin) eingegebenen Teilnehmeridentifikationsnummer 40 übereinstimmt), wird zu einem elften Ablaufpunkt 111 verzweigt. Falls diese Prüfung negativ verläuft (d.h. es existiert im Speicherbereich 15 keine gespeicherte Teilnehmeridentifikationsnummer, die mit der (bis dahin) eingegebenen Teilnehmeridentifikationsnummer 40 übereinstimmt), wird zu einem vierten Ablaufpunkt 104 verzweigt. Beim vierten Ablaufpunkt 104 wird das erste Zeitintervall gestartet und geprüft, ob innerhalb des ersten Zeitintervalls ein weiteres oder zusätzliches Zeichen bzw. eine weitere oder zusätzliche Ziffer am Telekommunikationsendgerät 12 eingegeben wurde. Ist dies der Fall wird zum dritten Ablaufpunkt 103 verzweigt und der Vergleich gemäß dem dritten Ablaufpunkt 103 unter Verwendung der eingegeben Teilnehmeridentifikationsnummer 40 unter Einbeziehung des zusätzlichen Zeichens bzw. der zusätzlichen Ziffer durchgeführt. Wird beim vierten Ablaufpunkt 104 innerhalb des ersten Zeitintervalls kein weiteres oder zusätzliches Zeichen bzw. eine weitere oder zusätzliche Ziffer am Telekommunikationsendgerät 12 eingegeben, wird zu einem fünften Ablaufpunkt 105 verzweigt. Beim fünften Ablaufpunkt 105 wird die Verbindung zwischen dem integrierten Zugangsgerät 10 und dem Telekommunikationsnetz 5 unter Verwendung der eingegebenen Teilnehmeridentifikationsnummer 40 als zu sendende Teilnehmeridentifikationsnummer aufgebaut und zu einem sechsten Ablaufpunkt 106 verzweigt. Der vierte und fünfte Ablaufpunkt 104, 105 entspricht dem dritten Verfahrensschritt gemäß dem erfindungsgemäßen Verfahren. Beim sechsten Ablaufpunkt 106 wird geprüft, ob die Verbindung erfolgreich aufgebaut wurde, d.h. ob einer der Fälle vorliegt, wonach die Verbindung erfolgreich hergestellt wird und/oder die Verbindung zwar (im Sinne eines Rufzeichens beim Zielteilnehmer) hergestellt wird, der Zielteilnehmer jedoch nicht abnimmt, und/oder die Verbindung aufgrund einer besetzten Leitung nicht hergestellt wird. Falls dies nicht der Fall ist wird zu einem siebten Ablaufpunkt 107 verzweigt. Falls dies der Fall ist, wird zu einem achten Ablaufpunkt 108 verzweigt. Beim siebten Ablaufpunkt liegt der Fall vor, dass nach Übertragung der gesendeten Teilnehmeridentifikationsnummer der Fehlerzustand "kein Anschluss unter dieser Nummer" oder aber der Fehlerzustand "Rufnummer ist nicht bekannt" erkannt wird; die gesendete Teilnehmeridentifikationsnummer wird nicht im Speicherbereich 15 als eine der gespeicherten Teilnehmeridentifikationsnummern 50 gespeichert; das Verfahren ist beendet. Beim achten Ablaufpunkt 108 wird geprüft, ob es sich bei der gesendeten Teilnehmeridentifikationsnummer um eine zweistellige Teilnehmeridentifikationsnummer oder um eine Teilnehmeridentifikationsnummer mit Steuercodes (wie etwa "*" oder "#") handelt. Falls dies der Fall ist, wird zu einem neunten Ablaufpunkt 109 verzweigt; die gesendete Teilnehmeridentifikationsnummer wird nicht im Speicherbereich 15 als eine der gespeicherten Teilnehmeridentifikationsnummern 50 gespeichert; das Verfahren ist beendet. Falls beim achten Ablaufpunkt 108 erkannt wird, dass es sich bei der gesendeten Teilnehmeridentifikationsnummer nicht um eine zweistellige Teilnehmeridentifikationsnummer und nicht um eine Teilnehmeridentifikationsnummer mit Steuercodes (wie etwa "*" oder "#") handelt, wird zu einem zehnten Ablaufpunkt 110 verzweigt; die gesendete Teilnehmeridentifikationsnummer wird im Speicherbereich 15 als eine der gespeicherten Teilnehmeridentifikationsnummern 50 gespeichert; das Verfahren ist beendet. Beim elften Ablaufpunkt 111 wird die Verbindung zwischen dem integrierten Zugangsgerät 10 und dem Telekommunikationsnetz 5 direkt (d.h. unmittelbar im Anschluss an die Prüfung bzw. den Vergleich gemäß dem dritten Ablaufpunkt 103 oder nach Ablauf eines zweiten (gegenüber dem ersten Zeitintervall kürzeren) Zeitintervalls hergestellt und zu einem zwölften Ablaufpunkt 112 verzweigt. Der elfte Ablaufpunkt 111 entspricht dem vierten Verfahrensschritt gemäß der vorliegenden Erfindung. Beim zwölften Ablaufpunkt 112 wird geprüft, ob die Verbindung erfolgreich aufgebaut wurde, d.h. ob einer der Fälle vorliegt, wonach die Verbindung erfolgreich hergestellt wird und/oder die Verbindung zwar (im Sinne eines Rufzeichens beim Zielteilnehmer) hergestellt wird, der Zielteilnehmer jedoch nicht abnimmt, und/oder die Verbindung aufgrund einer besetzten Leitung nicht hergestellt wird. Falls diese Prüfung positiv verläuft wird zu einem dreizehnten Ablaufpunkt 113 verzweigt, andernfalls wird zu einem vierzehnten Ablaufpunkt 114 verzweigt. Beim dreizehnten Ablaufpunkt 113 wird die gesendete Teilnehmeridentifikationsnummer auf dem ersten Speicherplatz 51 des Speicherbereichs 15 gespeichert. Optional kann es vorgesehen sein, dass zuvor alle gespeicherten Teilnehmeridentifikationsnummern 50 einen um eins erhöhten Speicherplatz des Speicherbereichs 15 erhalten. Alternativ dazu erhalten die gespeicherten Teilnehmeridentifikationsnummern 50 nicht einen um eins erhöhten Speicherplatz des Speicherbereichs 15, sondern es wird lediglich die gesendete Teilnehmeridentifikationsnummer auf dem ersten Speicherplatz 51 des Speicherbereichs 15 gespeichert; das Verfahren ist beendet. Beim vierzehnten Ablaufpunkt 114 liegt der Fall vor, dass nach Übertragung der gesendeten Teilnehmeridentifikationsnummer der Fehlerzustand "kein Anschluss unter dieser Nummer" oder aber der Fehlerzustand "Rufnummer ist nicht bekannt" erkannt wird; die gespeicherte Teilnehmeridentifikationsnummer wird aus dem Speicherbereich 15 gelöscht; das Verfahren ist beendet.

## Patentansprüche

1. Verfahren zum beschleunigten Aufbau einer Verbindung zwischen einem integrierten Zugangsgerät (10), IAD, integrated access device und einem Telekommunikationsnetz (5) unter Benutzung eines über eine analoge oder digitale Schnittstelle (11) an das integrierte Zugangsgerät (10) angeschlossenen und das Überlappungswahlverfahren, overlap dialing benutzenden Telekommunikationsendgeräts (12), wobei in einem Speicherbereich (15) eine Mehrzahl von gespeicherten Teilnehmeridentifikationsnummern (50) gespeichert sind, wobei das Verfahren die folgenden Schritte umfasst:
- - in einem ersten Verfahrensschritt wird eine eine Mehrzahl von Zeichen umfassende eingegebene Teilnehmeridentifikationsnummer (40) zum integrierten Zugangsgerät (10) übertragen,
- - in einem zweiten Verfahrensschritt wird ein Vergleich der eingegebenen Teilnehmeridentifikationsnummer (40) mit den gespeicherten Teilnehmeridentifikationsnummern (50) des Speicherbereichs (15) durchgeführt,
- - in einem dritten Verfahrensschritt wird während eines vorgegebenen ersten Zeitintervalls nach der Eingabe des zuletzt eingegebenen Zeichens der eingegebenen Teilnehmeridentifikationsnummer (40) gewartet, bevor der Aufbau der Verbindung zwischen dem integrierten Zugangsgerät (10) und dem Telekommunikationsnetz (5) unter Verwendung der eingegebenen Teilnehmeridentifikationsnummer (40) initiiert wird
- - in einem vierten Verfahrensschritt wird der Aufbau der Verbindung zwischen dem integrierten Zugangsgerät (10) und dem Telekommunikationsnetz (5) durch Übertragung einer der Mehrzahl von gespeicherten Teilnehmeridentifikationsnummern (50) initiiert,
wobei - für den Fall, dass der Vergleich der eingegebenen Teilnehmeridentifikationsnummer (40) mit einer der gespeicherten Teilnehmeridentifikationsnummern (50) ein positives Vergleichsergebnis liefert - entweder direkt oder nach Ablauf eines vorgegebenen zweiten Zeitintervalls der vierte Verfahrensschritt
oder - für den Fall, dass der Vergleich der eingegeben Teilnehmeridentifikationsnummer (40) mit einer der gespeicherten Teilnehmeridentifikationsnummern (50) ein negatives Vergleichsergebnis liefert - der dritte Verfahrensschritt unter Verwendung der eingegebenen Teilnehmeridentifikationsnummer (40) als zu sendende Teilnehmeridentifikationsnummer durchgeführt wird,
wobei im Fall der Eingabe eines zusätzlichen Zeichens der eingegebenen Teilnehmeridentifikationsnummer (40) während des vorgegebenen ersten Zeitintervalls der Vergleich des zweiten Schritts unter Verwendung der eingegebenen Teilnehmeridentifikationsnummer (40) unter Einbeziehung des zusätzlichen Zeichens durchgeführt wird.

2. Verfahren nach Anspruch 1, **dadurch gekennzeichnet, dass** die Verbindung eine Sprachverbindung gemäß dem Voice-over-Internet Protokoll-VoIP ist.

3. Verfahren nach einem der vorhergehenden Ansprüche, **dadurch gekennzeichnet, dass** der Aufbau der Verbindung zwischen dem integrierten Zugangsgerät (10) und dem Telekommunikationsnetz (5) mittels einer Einladungsnachricht, invite-Nachricht initiiert wird, insbesondere einer SIP-Invite-Nachricht.

4. Verfahren nach einem der vorhergehenden Ansprüche, **dadurch gekennzeichnet, dass** der Aufbau der Verbindung zwischen dem integrierten Zugangsgerät (10) und dem Telekommunikationsnetz (5) durch Übertragung einer die eingegebene Teilnehmeridentifikationsnummer (40) aufweisenden Nachricht vom integrierten Zugangsgerät (10) zum Zugangsknoten (20) des Telekommunikationsnetzes (5) initiiert wird.

5. Verfahren nach einem der vorhergehenden Ansprüche, **dadurch gekennzeichnet, dass** das integrierte Zugangsgerät (10) den Speicherbereich (15) aufweist.

6. Verfahren nach einem der vorhergehenden Ansprüche, **dadurch gekennzeichnet, dass** der Vergleich im zweiten Verfahrensschritt der eingegebenen Teilnehmeridentifikationsnummer (40) mit den gespeicherten Teilnehmeridentifikationsnummern (50) des Speicherbereichs (15) unter Einbeziehung jeweils aller Zeichen der gespeicherten Teilnehmeridentifikationsnummern (50) durchgeführt wird.

7. Verfahren nach einem der vorhergehenden Ansprüche, **dadurch gekennzeichnet, dass** der Speicherbereich (15) eine vorgegebene Anzahl von Speicherplätzen zur Abspeicherung von gespeicherten Teilnehmeridentifikationsnummern (50) aufweist, wobei der Speicherbereich (15) einen ersten Speicherplatz und einen letzten Speicherplatz aufweist.

8. Verfahren nach einem der vorhergehenden Ansprüche, **dadurch gekennzeichnet, dass** während oder nach der Durchführung des dritten Verfahrensschritts die zu sendende Teilnehmeridentifikationsnummer als eine gespeicherte Teilnehmeridentifikationsnummer (50) im Speicherbereich (15) abgespeichert wird.

9. Verfahren nach einem der vorhergehenden Ansprüche, **dadurch gekennzeichnet, dass** bei der Abspeicherung im Speicherbereich (15) der zu sendenden Teilnehmeridentifikationsnummer als eine gespeicherte Teilnehmeridentifikationsnummer (50)
- - alle gespeicherten Teilnehmeridentifikationsnummern (50) einen um eins erhöhten Speicherplatz des Speicherbereichs (15) erhalten,
- - die zu sendende Teilnehmeridentifikationsnummer auf dem ersten Speicherplatz der vorgegebenen Anzahl von Speicherplätzen des Speicherbereichs (15) abgespeichert wird,
wobei - für den Fall, dass zeitlich vor der Abspeicherung der zu sendenden Teilnehmeridentifikationsnummer der letzte Speicherplatz mit einer der gespeicherten Teilnehmeridentifikationsnummern (50) gefüllt war, diese gespeicherte Teilnehmeridentifikationsnummer nach der Abspeicherung der zu sendenden Teilnehmeridentifikationsnummer nicht mehr gespeichert ist.

10. Integriertes Zugangsgerät (10), IAD, integrated access device zum beschleunigten Aufbau einer Verbindung zwischen dem integrierten Zugangsgerät (10) und dem Telekommunikationsnetz (5) unter Benutzung eines über eine analoge oder digitale Schnittstelle (11) an das integrierte Zugangsgerät (10) angeschlossenen und das Überlappungswahlverfahren, overlap dialing benutzenden Telekommunikationsendgeräts (12), wobei in einem Speicherbereich (15) des integrierten Zugangsgeräts (10) eine Mehrzahl von gespeicherten Teilnehmeridentifikationsnummern (50) gespeichert sind, wobei die Übertragung einer eine Mehrzahl von Zeichen umfassende eingegebene Teilnehmeridentifikationsnummer (40) vom Telekommunikationsendgerät (12) zum integrierten Zugangsgerät (10) vorgesehen ist, wobei ein Vergleich der eingegebenen Teilnehmeridentifikationsnummer (40) mit den gespeicherten Teilnehmeridentifikationsnummern (50) des Speicherbereichs (15) vorgesehen ist, wobei das integrierte Zugangsgerät (10) konfiguriert ist, während eines vorgegebenen ersten Zeitintervalls nach der Eingabe des zuletzt eingegebenen Zeichens der eingegebenen Teilnehmeridentifikationsnummer (40) zu warten, bevor der Aufbau der Verbindung zwischen dem integrierten Zugangsgerät (10) und dem Telekommunikationsnetz (5) unter Verwendung der eingegebenen Teilnehmeridentifikationsnummer (40) initiiert wird, wobei das integrierte Zugangsgerät (10) konfiguriert ist, den Aufbau der Verbindung zwischen dem integrierten Zugangsgerät (10) und dem Telekommunikationsnetz (5) durch Übertragung einer der Mehrzahl von gespeicherten Teilnehmeridentifikationsnummern (50) zu initiieren,
wobei das integrierte Zugangsgerät (10) - für den Fall, dass der Vergleich der eingegebenen Teilnehmeridentifikationsnummer (40) mit einer der gespeicherten Teilnehmeridentifikationsnummern (50) ein positives Vergleichsergebnis liefert - konfiguriert ist, entweder direkt anschließend oder nach Ablauf eines vorgegebenen zweiten Zeitintervalls den Aufbau der Verbindung zwischen dem integrierten Zugangsgerät (10) und dem Telekommunikationsnetz (5) durch Übertragung der einen der Mehrzahl von gespeicherten Teilnehmeridentifikationsnummern (50) zu initiieren oder wobei das integrierte Zugangsgerät (10) - für den Fall, dass der Vergleich der eingegeben Teilnehmeridentifikationsnummer (40) mit einer der gespeicherten Teilnehmeridentifikationsnummern (50) ein negatives Vergleichsergebnis liefert - konfiguriert ist während eines vorgegebenen ersten Zeitintervalls nach der Eingabe des zuletzt eingegebenen Zeichens der eingegebenen Teilnehmeridentifikationsnummer (40) zu warten, bevor der Aufbau der Verbindung zwischen dem integrierten Zugangsgerät (10) und dem Telekommunikationsnetz (5) unter Verwendung der eingegebenen Teilnehmeridentifikationsnummer (40) als zu sendende Teilnehmeridentifikationsnummer initiiert wird,
wobei im Fall der Eingabe eines zusätzlichen Zeichens der eingegebenen Teilnehmeridentifikationsnummer (40) während des vorgegebenen ersten Zeitintervalls der Vergleich unter Verwendung der eingegebenen Teilnehmeridentifikationsnummer (40) unter Einbeziehung des zusätzlichen Zeichens durchgeführt wird.

11. Integriertes Zugangsgerät (10) nach Anspruch 10, **dadurch gekennzeichnet, dass** das integrierte Zugangsgerät (10) derart konfiguriert ist, dass der Vergleich im zweiten Verfahrensschritt der eingegebenen Teilnehmeridentifikationsnummer (40) mit den gespeicherten Teilnehmeridentifikationsnummern (50) des Speicherbereichs (15) unter Einbeziehung jeweils aller Zeichen der gespeicherten Teilnehmeridentifikationsnummern (50) durchgeführt wird.

12. Computerprogramm mit Programmcodemitteln, mit deren Hilfe alle Schritte eines Verfahrens nach einem der Ansprüche 1 bis 9 durchführbar sind, wenn das Computerprogramm auf einer programmierbaren Einrichtung oder einem integrierten Zugangsgerät (10) ausgeführt wird.

13. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 9 durchführbar sind, wenn das Computerprogramm auf einer programmierbaren Einrichtung oder einem integrierten Zugangsgerät (10) ausgeführt wird.

## Claims

1. Method for accelerated establishment of a connection between an integrated access device (10) and a telecommunications network (5) using an analogue or digital interface (11) connected to the integrated access device (10) and the telecommunications terminal (12) using the overlap dialling method, wherein a plurality of stored subscriber identification numbers (50) are stored in a storage area (15), wherein the method comprises the following steps:
- in a first method step, an input subscriber identification number (40) comprising a plurality of characters is transmitted to the integrated access device (10),
- in a second method step, a comparison is made between the input subscriber identification number (40) and the stored subscriber identification numbers (50) of the storage area (15),
- in a third method step, an interval is maintained during a predetermined first time interval after input of the last input character subscriber identification number (40) before the establishment of the connection between the integrated access device (10) and the telecommunications network (5) using the input subscriber identification number (40) is initiated
- in a fourth method step, the establishment of the connection between the integrated access device (10) and the telecommunications network (5) is initiated by transmission of a plurality of stored subscriber identification numbers (50),
wherein - in the case that the comparison of the input subscriber identification number (40) with the stored subscriber identification numbers (50) gives a positive comparison result - either directly or after a predetermined second time interval method step has elapsed or - in the case that the comparison of the input subscriber identification number (40) with one of the stored subscriber identification numbers (50) gives a negative comparison result - the third method step is carried out using the input subscriber identification number (40) as the subscriber identification number to be transmitted,
wherein in the case of the input of an additional character of the input subscriber identification number (40) during the predetermined first time interval, the comparison of the second step is carried out using the input subscriber identification number (40) including the additional character.

2. Method in accordance with claim 1, **characterised in that** the connection is a speech connection in accordance with the voice-over-Internet protocol.

3. Method in accordance with one of the preceding claims, **characterised in that** the establishment of the connection between the integrated access device (10) at the telecommunications network (5) is initiated by means of an invite message, in particular an SIP-Invite message.

4. Method in accordance with one of the preceding claims, **characterised in that** the establishment of the connection between the integrated access device (10) and the telecommunications network (5) is initiated by transmission of a message from the integrated access device (10) to the access node (20) of the telecommunications network (5) including the input subscriber identification number (40).

5. Method in accordance with one of the preceding claims, **characterised in that** the integrated access device (10) includes the storage area (15).

6. Method in accordance with one of the preceding claims, **characterised in that** the comparison in the second method step of the input subscriber identification number (40) with the stored subscriber identification numbers (50) of the storage area (15) is carried out including every character of the stored subscriber identification numbers (50).

7. Method in accordance with one of the preceding claims, **characterised in that** the storage area (15) has a predetermined number of storage places for storing the stored subscriber identification numbers (50), wherein the storage area (15) has a first storage location and a last storage location.

8. Method in accordance with one of the preceding claims, **characterised in that** during or after the execution of the third method step the subscriber identification number to be transmitted is stored as a stored subscriber identification number (50) in the storage area (15).

9. Method in accordance with one of the preceding claims **characterised in that** during the storage in the storage area (15) of the subscriber identification number to be transmitted as a stored subscriber identification number (50)
- all stored subscriber identification numbers (50) receive a storage location of the storage area (15) increased by one,
- the subscriber identification number to be transmitted is stored on the first storage location of the predetermined number of storage locations of the storage area (15),
wherein - in the case that in the time before the storage of the subscriber identification number to be transmitted the last storage location was filled by one of the stored subscriber identification numbers (50), this stored subscriber identification number is no longer stored after storage of the subscriber identification number to be transmitted.

10. Integrated access device (10) for accelerated establishment of a connection between the integrated access device (10) and the telecommunications network (5) with use of a telecommunications transmitting device (12) using an analogue or digital interface (11) connected to the integrated access device (10) and overlap dialling, wherein a plurality of stored subscriber identification numbers (50) are stored in a storage area (15) of the integrated access device (10), wherein the transmission of an input subscriber identification number (40) comprising a plurality of characters is provided from the telecommunications transmission device (12) to the integrated access device (10), wherein a comparison of the input subscriber identification number (40) with the stored subscriber identification numbers (50) of the storage area (15) is provided, wherein the integrated access device (10) is configured to wait during a predetermined first time interval after input of the last input symbol of the input subscriber identification number (40), before the establishment of the connection between the integrated access device (10) and the telecommunications network (5) using the input subscriber identification number (40) is initiated, wherein the integrated access device (10) to establish the connection between the integrated access device (10) and the telecommunications network (5) by transmission of one of the plurality of stored subscriber identification numbers (50),
wherein the integrated access device (10) - in the case that the comparison of the input subscriber identification number (40) with the stored subscriber identification numbers (50) gives a positive comparison result - is configured, either directly after or after a predetermined second time interval has elapsed, to initiate the establishment of the connection between the integrated access device (10) and a telecommunications network (5) by transmission of one of the plurality of stored subscriber identification numbers (50) or wherein the integrated access device (10) - in the case that the comparison of the input subscriber identification number (40) with one of the stored subscriber identification numbers (50) gives a negative comparison result - is configured to wait during a predetermined first time interval after input of the last input symbol of the input subscriber identification number (40) before initiating the establishment of the connection between the integrated access device (10) and the telecommunications network (5) using the input subscriber identification number (40) as subscriber identification number to be transmitted,
wherein in the case of input of an additional character of the input subscriber identification number (40) during the predetermined first time interval the comparison is made using the input subscriber identification number (40) including the additional symbol.

11. Integrated access device (10) in accordance with claim 10, **characterised in that** the integrated access device (10) is configured so that the comparison in the second method step of the input subscriber identification number (40) with the stored subscriber identification numbers (50) of the storage area (15) is carried out including every character of the stored subscriber identification numbers (50).

12. Computer program with program code means by means of which all steps of a method in accordance with one of the claims 1 to 9 can be carried out, if the computer program is executed on a programmable equipment or an integrated access device (10).

13. Computer program product with a computer-readable medium and a computer program stored on the computer-readable medium with program code means, which are suitable to allow all steps of a method in accordance with one of the claims 1 to 9 to be carried out when the computer program is executed on a programmable equipment or an integrated access device (10).

## Revendications

1. Procédé d'établissement accéléré d'une liaison entre un appareil d'accès intégré (10) IAD integrated access device et un réseau de télécommunication (5) en utilisant un terminal de télécommunication (12) raccordé par une interface analogique ou numérique (11) à l'appareil d'accès intégré (10) et utilisant le procédé de numérotation par chevauchement overlap dialing, une pluralité de numéros d'identification de participants (50) étant enregistrés dans une partie mémoire (15), ce procédé comprenant les étapes suivantes :
- un numéro d'identification de participant (40) saisi comprenant une pluralité de caractères est, dans une première étape opératoire, transféré à l'appareil d'accès intégré (10),
- une comparaison du numéro d'identification de participant (40) saisi avec les numéros d'identification de participants (50) enregistrés de la partie mémoire (15) est réalisée dans une deuxième étape opératoire,
- on attend, pendant une troisième étape opératoire, durant un premier laps de temps prédéfini après la saisie du dernier caractère saisi du numéro d'identification de participant (40) saisi avant que l'établissement de la liaison entre l'appareil d'accès intégré (10) et le réseau de télécommunication (5) soit initié en utilisant le numéro d'identification de participant (40) saisi,
- dans une quatrième étape opératoire, l'établissement de la liaison entre l'appareil d'accès intégré (10) et le réseau de télécommunication (5) est initié par transfert d'un numéro parmi la pluralité de numéros d'identification de participants (50) enregistrés,
sachant que - dans le cas où la comparaison du numéro d'identification de participant (40) saisi avec un des numéros d'identification de participants (50) enregistrés, donne un résultat de comparaison positif - soit directement, soit après écoulement d'un deuxième laps de temps prédéfini, la quatrième étape opératoire
ou - dans le cas où la comparaison du numéro d'identification de participant (40) saisi avec un des numéros d'identification de participants (50) enregistrés, donne un résultat de comparaison négatif -
la troisième étape opératoire est réalisée en utilisant le numéro d'identification de participant (40) saisi comme numéro d'identification de participant à envoyer,
sachant que, dans le cas de saisie d'un caractère supplémentaire du numéro d'identification de participant (40) saisi pendant le premier laps de temps prédéfini, la comparaison de la deuxième étape est réalisée en utilisant le numéro d'identification de participant (40) saisi en intégrant le caractère supplémentaire.

2. Procédé selon la revendication 1, **caractérisé en ce que** la liaison est une liaison vocale conforme au protocole Voice-over-Internet VoIP.

3. Procédé selon une des revendications précédentes, **caractérisé en ce que** l'établissement de la liaison entre l'appareil d'accès intégré (10) et le réseau de télécommunication (5) est initié au moyen d'un message d'invitation message invite, en particulier d'un message SIP-Invite.

4. Procédé selon une des revendications précédentes, **caractérisé en ce que** l'établissement de la liaison entre l'appareil d'accès intégré (10) et le réseau de télécommunication (5) est initié par transfert d'un message comportant le numéro d'identification de participant (40) saisi de l'appareil d'accès intégré (10) au nodule d'accès (20) du réseau de télécommunication (5).

5. Procédé selon une des revendications précédentes, **caractérisé en ce que** l'appareil d'accès intégré (10) englobe la partie mémoire (15).

6. Procédé selon une des revendications précédentes, **caractérisé en ce que** la comparaison faite lors de la deuxième étape opératoire du numéro d'identification de participant (40) saisi avec les numéros d'identification de participants (50) enregistrés de la partie mémoire (15) est réalisée en intégrant respectivement tous les caractères des numéros d'identification de participants (50) enregistrés.

7. Procédé selon une des revendications précédentes, **caractérisé en ce que** la partie mémoire (15) présente un nombre prédéfini d'emplacements de mémoire pour la sauvegarde des numéros d'identification de participants (50) enregistrés, la partie mémoire (15) présentant un premier emplacement de mémoire et un dernier emplacement de mémoire.

8. Procédé selon une des revendications précédentes, **caractérisé en ce que**, pendant ou après la réalisation de la troisième étape opératoire, le numéro d'identification de participant à envoyer est sauvegardé sous forme d'un numéro d'identification de participant (50) enregistré dans la partie mémoire (15).

9. Procédé selon une des revendications précédentes, **caractérisé en ce que**, lors de la sauvegarde dans la partie mémoire (15) du numéro d'identification de participant à envoyer sous forme de numéro d'identification de participant (50) enregistré,
- - tous les numéros d'identification de participants (50) enregistrés reçoivent un emplacement de mémoire augmenté d'un de la partie mémoire (15),
- - le numéro d'identification de participant à envoyer est sauvegardé sur le premier emplacement de mémoire du nombre prédéfini d'emplacements de mémoire de la partie mémoire (15),
sachant que - dans le cas où, chronologiquement avant la sauvegarde du numéro d'identification de participant à envoyer, le dernier emplacement de mémoire a été rempli par un des numéros d'identification de participants (50) enregistrés, ce numéro d'identification de participant enregistré n'est plus sauvegardé après la sauvegarde du numéro d'identification de participant à envoyer.

10. Appareil d'accès intégré (10) IAD integrated access device pour l'établissement accéléré d'une liaison entre l'appareil d'accès intégré (10) et le réseau de télécommunication (5) en utilisant un terminal de télécommunication (12) raccordé par une interface analogique ou numérique (11) à l'appareil d'accès intégré (10) et le procédé de numérotation par chevauchement overlap dialing, une pluralité de numéros d'identification de participants (50) étant enregistrés dans une partie mémoire (15) de l'appareil d'accès intégré (10), le transfert d'un numéro d'identification de participant (50) saisi comprenant une pluralité de caractères par le terminal de télécommunication (12) vers l'appareil d'accès intégré (10) étant prévu, une comparaison du numéro d'identification de participant (40) saisi avec les numéros d'identification de participants (50) enregistrés de la partie mémoire (15) étant prévue, l'appareil d'accès intégré (10) étant configuré pour attendre, durant un premier laps de temps prédéfini après la saisie du dernier caractère saisi du numéro d'identification de participant (40) saisi, avant que l'établissement de la liaison entre l'appareil d'accès intégré (10) et le réseau de télécommunication (5) soit initié en utilisant le numéro d'identification de participant (40) saisi, l'appareil d'accès intégré (10) étant configuré pour établir la liaison entre l'appareil d'accès intégré (10) et le réseau de télécommunication (5) par transfert d'un numéro parmi la pluralité de numéros d'identification de participants (50) enregistrés, sachant que - dans le cas où la comparaison du numéro d'identification de participant (40) saisi avec un des numéros d'identification de participants (50) enregistrés, donne un résultat de comparaison positif - l'appareil d'accès intégré (10) est configuré pour, soit directement après, soit après écoulement d'un deuxième laps de temps défini, initier l'établissement de la liaison entre l'appareil d'accès intégré (10) et le réseau de télécommunication (5) par transfert d'un numéro parmi la pluralité de numéros d'identification de participants (50) enregistrés ou que l'appareil d'accès intégré (10) - dans le cas où la comparaison du numéro d'identification de participant (40) saisi avec un des numéros d'identification de participants (50) enregistrés, donne un résultat de comparaison négatif - est configuré pour, durant un premier laps de temps prédéfini après la saisie du dernier caractère saisi du numéro d'identification de participant (40) saisi, attendre avant que l'établissement de la liaison entre l'appareil d'accès intégré (10) et le réseau de télécommunication (5) soit initié en utilisant le numéro d'identification de participant (40) saisi comme numéro d'identification de participant à envoyer,
sachant que, dans le cas de la saisie d'un caractère supplémentaire du numéro d'identification de participant (40) saisi pendant le premier laps de temps prédéfini, la comparaison est réalisée en utilisant le numéro d'identification de participant (40) saisi en intégrant le caractère supplémentaire.

11. Appareil d'accès intégré (10) selon la revendication 10, **caractérisé en ce que** l'appareil d'accès intégré (10) est configuré de manière à ce que la comparaison faite dans la deuxième étape opératoire du numéro d'identification de participant (40) saisi avec les numéros d'identification de participants (50) enregistrés de la partie mémoire (15) soit réalisée en intégrant respectivement tous les caractères des numéros d'identification de participants (50) enregistrés.

12. Programme informatique comportant des moyens de codage de programme, à l'aide duquel toutes les étapes d'un procédé selon une des revendications 1 à 9 peuvent être réalisées si le programme informatique est exécuté sur un dispositif programmable ou un appareil d'accès intégré (10).

13. Produit de programmation informatique comportant un support lisible par ordinateur et un programme informatique enregistré sur le support lisible par ordinateur comportant des moyens de codage de programme, qui est apte à rendre réalisables toutes les étapes d'un procédé selon une des revendications 1 à 9 si le programme informatique est exécuté sur un dispositif programmable ou un appareil d'accès intégré (10).
